# EUROPÄISCHE PATENTSCHRIFT

(11) **EP 3 424 095 B1**
(45) Veröffentlichungstag und Bekanntmachung des Hinweises auf die Patenterteilung: **08.04.2020**
(21) Anmeldenummer: 17706725.3
(22) Anmeldetag: 21.02.2017
(51) Int. Cl.: H01M 2/10

(54) **AKKUPACK FÜR EINE HANDWERKZEUGMASCHINE**
BATTERY PACK FOR HANDHELD POWERTOOL
BLOC-BATTERIE POUR OUTIL PORTATIF ÉLECTRIQUE

(30) Priorität: 02.03.2016 DE 102016203427
(43) Veröffentlichungstag der Anmeldung: 09.01.2019
(73) Patentinhaber: Robert Bosch GmbH, 70442 Stuttgart (DE)
(72) Erfinder: REJMAN, Marcin, 71334 Waiblingen (DE); KLEE, Christoph, 70599 Stuttgart (DE); SEGRET, Mickael, 70569 Stuttgart (DE)
(86) Internationale Anmeldenummer: PCT/EP2017/053879
(87) Internationale Veröffentlichungsnummer: WO 2017/148739

(56) Entgegenhaltungen:
- DE-A1-102016 203 422
- US-A1- 2002 182 480
- US-A1- 2006 164 032

## Beschreibung

Die vorliegende Erfindung betrifft einen Akkupack für eine Handwerkzeugmaschine nach Anspruch 1.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

Derartige Akkupacks sind grundsätzlich bekannt und weisen in der Regel eine Mehrzahl von in Parallel- und/oder Reihenschaltung verbundener wiederaufladbarer Akkumulatoren, beispielsweise drei in Reihe geschaltete, zylinderförmige Li-Ionen-Zellen mit z.B. je 3,6 V mit einer Gesamtspannung von 10,8 V, auf. Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer oder einer Schnittstelle oder dergleichen der Handwerkzeugmaschine anbringbar ist.

Die Akkuzelle muss mit der Akkupackelektronik verbunden werden, und bei mehreren Akkuzellen müssen diese zum einen untereinander und zum anderen mit der Akkupackelektronik verbunden werden. Dabei werden für die Reihenschaltung zum Teil sogenannte Leiterbleche und/oder Kabel verwendet, die an die jeweiligen komplementären Pole einer Akkuzelle angelötet werden und diese miteinander verbinden. Die Leiterbleche und/oder Kabel sind mit den Zellverbindern über leitende Verbindungen, in der Regel Löt- oder Schweißverbindungen verbunden.

Nachteilig am genannten Stand der Technik ist, dass die Verbindung der Zellen untereinander komplexe und zeitaufwändige Montageschritte erfordert, wobei die Art der erreichten Verbindung gegenüber starken mechanischen Belastungen nicht ohne Weiteres resistent ist, so dass der Montageprozess aufwendig und kostenintensiv ist und die Verbindungen fehleranfällig sind.

### Offenbarung der Erfindung

Aufgabe der Erfindung ist es, die oben genannten Nachteile zu verbessern und ein Akkupack für eine Handwerkzeugmaschine der eingangs genannten Art bereitzustellen, bei dem die elektrischen Verbindungen innerhalb des Akkupacks sowie dessen Zusammenbau vereinfacht werden. Ferner soll der Akkupack eine gute Montierbarkeit aufweisen, und dabei möglichst flexibel, kostengünstig und einfach aufgebaut sein.

Diese Aufgabe wird durch ein Akkupack gemäß Anspruch 1 gelöst. Vorteilhafte Ausgestaltungen, Varianten und Weiterbildungen der Erfindung sind den Unteransprüchen zu entnehmen.

Erfindungsgemäß ist vorgesehen, dass ein Akkupack für eine Handwerkzeugmaschine ein Akkupackgehäuse, wenigstens einen Zellhalter und eine Akkupackelektronik aufweist, wobei der Zellhalter mindestens eine Akkuzelle aufnimmt, wobei vorgesehen ist, dass die Akkupackelektronik zumindest eine flexible, insbesondere biegbare Leiterplatte umfasst. Bevorzugterweise weist die flexible Leiterplatte eine Biegesteifigkeit auf, die zumindest bereichsweise derart ausgestaltet ist, dass eine Biegeverformung der flexiblen Leiterplatte im montierten Zustand möglich ist. Dabei ist es von Vorteil, wenn die Biegeverformung der flexiblen Leiterplatte derart stattfinden kann, dass eine Mittelebene der Leiterplatte im Bereich der Biegeumformung um einen Winkel ϕ gegenüber einer ursprünglichen Lage verformt werden kann. Auf diese Weise kann gewährlistet werden, dass die flexible Leiterplatte an die geometrische Form des Akkupackgehäuses bzw. des Zellhalters variabel angepasst werden kann. Ferner können mehrere verschiedene elektrische Bauteile auf der flexiblen Leiterplatte positioniert werden, die normalerweise örtlich voneinander getrennt angeordnet sind, wie beispielsweise verschiedene Betätigungselemente, Leuchtanzeigen, Spannungsabgriffe, Temperatursensoren, diverse Funktionsgruppen der Akkupackelektronik, Antennen für ein Funkmodul, Anschlüsse für ein Wireless-Lademodul und/oder Anschlüsse zu einer Ladespule. Somit kann durch die vorliegende Erfindung die Komplexität der Verkabelung und/oder die Anzahl von Lötverbindungen innerhalb des Akkupackgehäuses reduziert werden, wodurch der Montageaufwand und damit die Kosten verringert und das Akkupack robuster und langlebiger werden.

Alternativ kann der Zellhalter mehrere miteinander in einer Parallel- und/oder in einer Reihenschaltung verbundene Akkuzellen aufweisen. Die Akkuzellen weisen in einer bevorzugten Ausführungsform jeweils eine zu einer Längsachse parallel verlaufende Mantelfläche auf, wobei die Mantelfläche von zwei senkrecht zu der Längsachse stehenden Stirnflächen begrenzt wird, und wobei die Mantelfläche und die Stirnflächen eine Außenhülle der Akkuzellen bilden.

Die Akkupackelektronik umfasst ferner zumindest eine Leiterplatte mit Kontaktelementen zur Herstellung einer elektrischen Verbindung zwischen dem Akkupack und der Handwerkzeugmaschine.

Leiterplatten bestehen dabei im Allgemeinen aus einem Basismaterial, welches eine Vielzahl einzelner Leiterbahnen bzw. Kontaktflächen aufweist. Die Leiterbahnen sind meist durch eine Schutzschicht, beispielsweise einem Lötstopplack, der sich mit Ausnahme der Anschlusskontakte bzw. Kontaktmittel über die gesamte Leiterplattenfläche zieht, geschützt. Leiterplatten sind als Träger für elektronische Bauteile geeignet und werden im allgemeinen vor ihrer Bestückung, direkt nach der Herstellung der Kontaktflächen bzw. Leiterbahnen, auf den freien Kontaktflächen und in den verkupferten Bohrungen mit der Schutzschicht versehen, die garantieren soll, dass sämtliche Kontaktmittel bzw. Anschlusskontakte, die beim Bestücken gebildet werden sollen, sowohl elektrisch als auch mechanisch allen Anforderungen genügen.

Erfindungsgemäß ist vorgesehen, dass auf der flexiblen Leiterplatte wenigstens ein mit der Akkuzelle korrespondierendes Kontaktmittel angeordnet ist, welches eine korrespondierende Akkuzelle elektrisch derart kontaktiert, dass auf eine Kontaktierung der einzelnen Akkuzellen mit der Akkupackelektronik über einen zusätzlichen Stromleiter verzichtet werden kann. Um eine derartige Kontaktierung zu erreichen, ist das Kontaktmittel für die Akkuzelle vorteilhafterweise in Form einer biegbaren Kontaktzunge der flexiblen Leiterplatte, vorzugsweise in Form von zwei gegenüberliegend angeordneten, biegbaren Kontaktzungen der flexiblen Leiterplatte ausgebildet, wobei die Kontaktmittel im Bereich der Biegeumformung um den Winkel ϕ gegenüber einer ursprünglichen Lage verformt werden können. Dabei hat der Winkel ϕ einen Wert zwischen 10° und 200°, bevorzugterweise zwischen 30° und 190°, besonders bevorzugterweise 180°.

Vorteilhafterweise weist die Akkupackelektronik einen Mikrocontroller oder einen alternativen Schaltkreis zur Einzelzellspannungsüberwachung auf, wobei der Mikrocontroller elektrisch mit dem Kontaktmittel verbunden ist und dazu konfiguriert ist, wenigstens einen Betriebsparameter der einzelnen Akkuzelle über das wenigstens eine Kontaktmittel zu erfassen. Diese Verbindung kann direkter Natur, oder auch über weitere Bauelemente zur Signalaufbereitung hergestellt sein. Mittels des Mikrocontrollers der Akkupackelektronik kann u. a. der Ladezustand über die Spannung der einzelnen Akkuzellen überwacht und mittels einer entsprechenden Regelung gesteuert werden. Durch die Einzelspannungsüberwachung kann aufgrund der Verbindung zwischen den Akkuzellen und der flexiblen Leiterplatte festgestellt werden, ob alle Akkuzellen vorschriftsmäßig geladen werden bzw. ob gegebenenfalls eine Ladespannung erreicht wird, den die Akkuzellen nicht zu verkraften vermögen. Auf diese Weise wird über lange Zeit eine gute Gebrauchsfähigkeit des entsprechenden Akkupacks erreicht.

In einer vorteilhaften Ausführungsvariante weist der Zellhalter wenigstens eine Öffnung zur Durchführung der Kontaktzunge in den Zellhalter auf, dabei werden einzelne Akkuzellen über die Kontaktzunge direkt mit der flexiblen Leiterplatte verbunden. Bevorzugterweise wird die Kontaktzunge mit Hilfe eines Werkzeuges in die Öffnung des Zellhalters in einen Zellkanal eingeführt, und beim Einführen der Akkuzelle um circa 180° umgebogen. Bei diesem Vorgang ist die Ausbildung der Kontaktfläche, insbesondere einer Kupferfläche, auf der Kontaktzunge entscheidend. Eine große Kontaktfläche führt zu einer erhöhten plastischen Verformung während des Biegevorgangs, wobei sich die Kontaktzunge derart rollt, dass das Ende in Richtung der Zellkanalwand zeigt, was sich nachteilig auf das spätere Einfügen der Akkuzellen auswirken kann. Bei einer zu geringen plastischen Verformung federt die Kontaktzunge nach dem Einfügen wieder in ihre Ausgangslage zurück, wodurch das Kontaktmittel ebenfalls nahe an der Zellkanalwand liegt und/oder nur im Bereich der Spitze verformt bleibt.

Abhilfe schafft eine Kontaktfläche die zumindest bereichsweise insbesondere an der Stelle, an der die Kontaktzunge abgebogen werden soll, durch eine Metallfläche ausgebildet wird, wobei die Kontaktfläche zumindest in den Bereichen der Biegeumformung durch eine Schutzschicht zumindest weitestgehend elektrisch isoliert ist. Erfindungsgemäß ist vorgesehen, dass die Kontaktzunge der flexiblen Leiterplatte derart ausgebildet sind, dass einerseits eine elastische Verformung der flexiblen Leiterplatte möglich ist und andererseits die Kontaktzunge in Bereichen der Biegeumformung die Kontaktfläche in Form einer Metallfläche mit einer weitestgehend elektrisch isolierenden Schutzschicht aufweist, die ausgebildet ist, eine mechanische Schwachstelle der flexiblen Leiterplatte zu definieren, insbesondere durch eine Querschnittsverringerung der Kontaktfläche im Bereich der Biegeumformung. Entsprechend ist vorgesehen, dass in Bereichen der Biegeumformung die Kontaktfläche zuerst eine Querschnittsverbreiterung, dann eine Querschnittsverringerung und anschließend eine Querschnittsverbreiterung durchläuft. Die breite Kontaktfläche hat höhere elastische Verformungsreserven, während die Querschnittsverringerung als mechanische Schwachstelle hilft, den Bereich der Biegeumformung zu definieren. Die Kontaktfläche auf der Kontaktzunge ist auf diese Weise im Bereich der Biegeumformung plastisch verformbar, während sie in den anderen Bereichen auf der Kontaktzunge und der flexiblen Leiterplatte weitgehend elastisch bleibt.

Ferner kann vorgesehen sein, dass der Übergang zwischen einem Bereich der Kontaktzunge, an dem die Kontaktfläche keine Schutzschicht aufweist, und dem Bereich der Kontaktzunge, der mit einer Schutzschicht versehen ist, derart ausgeführt ist, dass das Ende der Schutzschicht und der Querschnittsverbreiterung der Kontaktfläche der Kontaktzunge nicht gleichzeitig stattfindet, sondern die Schutzschicht die Kontaktfläche der Kontaktzunge teilweise überlappt. Vorteilhaft ist weiterhin, wenn die Kontur der Schutzschicht nicht in einer geraden Linie senkrecht zur Längsrichtung der Kontaktzunge erfolgt, sondern in einer Krümmung. Auf diese Weise entsteht kein scharfer Übergang der Biegesteifigkeit und damit auch keine exponierte mechanische Schwachstelle. Aus den gleichen Gründen ist es vorteilhaft, wenn die unter der Schutzschicht liegende Kontaktfläche nicht entlang einer senkrecht zur Längsrichtung der Kontaktzunge verlaufenden Linie endet, sondern entlang einer gekrümmt verlaufenden Linie. Auf diese Weise erfolgt in Längsrichtung der Kontaktzunge einerseits eine graduelle Zunahme der Kontaktfläche, andererseits aber auch eine graduelle Abnahme der Schutzschicht.

Insbesondere ist es von Vorteil, wenn die flexible Leiterplatte für jede Akkuzelle zwei Kontaktzungen aufweist, wobei die Kontaktzungen vorteilhafterweise durch sich gegenüberliegende Öffnungen des Zellhalters in gegenüberliegende Seiten des Zellkanals eingeführt werden, so dass beim Einführen der Akkuzelle ein gleichmäßiger Zug in beide Richtungen auf die flexible Leiterplatte entsteht. Vorteilhafterweise entsteht der Vorteil des symmetrischeren Zuges auch dann, wenn eine der beiden Kontaktzungen keine Kontaktfläche aufweist. In einer bevorzugten Ausführungsvariante ist die Kontaktzunge zur elektrischen Kontaktierung an die Akkuzelle geklemmt, geschweißt oder gelötet. Alternativ wäre es auch möglich, die Kontaktflächen der Kontaktzunge derart zu beschichten, dass im Presskontakt mit der Akkuzelle eine Kaltverschweißung oder eine ähnliche stoffschlüssige Verbindung stattfindet. Generell besitzt eine derartige Ausführung der Kontaktmittel als eine durch die Öffnungen eingefädelte Kontaktzunge und deren mechanische wie auch elektrische Kopplung mit einer Akkuzelle den Vorteil, dass die Kontaktzunge von der Akkuzelle im Bereich des Zellkanals eingeklemmt gelagert ist, wodurch insbesondere Vibrationen, wie sie bei Elektrohandwerkzeugen, insbesondere bei Schlagbohreinrichtungen oder Bohrhämmern im Betrieb entstehen, ausgeglichen werden können.

Alternativ ist es auch möglich, das wenigstens eine Kontaktmittel der flexiblen Leiterplatte nicht durch eine Öffnung in den Zellkanal des Zellhalters einzufädeln und dort an die Akkuzelle anzupressen, sondern im Zellhalter jeweils im Bereich des Zellkanals einen Ausbruch anzuordnen, durch den das Kontaktmittel weitestgehend zentral in den Zellkanal zur Kontaktierung der Akkuzelle eingeführt wird. In einer besonders bevorzugten Ausgestaltung weist die wenigstens eine Ackuzelle im Wesentlichen keine Isolierummantelung bzw. nur bereichsweise eine Isolierummantelung auf, wobei die Isolierummantelung zumindest in dem Bereich, in dem das Kontaktmittel die Akkuzelle kontaktiert, wenigstens eine Aussparung aufweist.

In einer vorteilhaften Ausgestaltung erfolgt die Kontaktierung zwischen mehreren Akkuzellen auf die oben beschriebene Art und Weise, wobei die Zellverbinder entweder einseitig in Kombination mit Schweißverbindungen am Pluspol der Ackuzelle oder beidseitig angeordnet sind.

In einer besonders bevorzugten Ausführungsform ist die flexible Leiterplatte eine einseitig bedruckte Leiterplatte, da eine solche meist günstiger herzustellen ist als eine beidseitig bedruckte Leiterplatte. Bei einer einseitig bedruckten flexiblen Leiterplatte ist es erforderlich, dass entweder die Kontaktmittel bzw. die Zellverbinder und/oder der Bereiche mit Anzeigen und Betätigungselement werden.

In einer vorteilhaften Ausführungsvariante weist die flexible Leiterplatte wenigstens eine Ausnehmung, vorzugsweise mehrere Ausnehmungen auf, wobei der Zellhalter wenigstens ein korrespondierendes Positionierungselement, vorzugsweise mehrere korrespondierende Positionierungselemente aufweist, wobei das Positionierungselement in einem montierten Zustand derart in die Ausnehmung der flexiblen Leiterplatte greift, dass die Position der flexible Leiterplatte an dem Zellhalter gesichert wird.

Vorteilhafterweise weist die flexible Leiterplatte mehrere elektrische Bauteile, insbesondere wenigstens ein Betätigungselement, wenigstens eine Leuchtanzeige, wenigstens einen Temperatursensor und/oder andere oberflächenmontierten Bauelemente auf. Oberflächenmontierte Bauelemente (Surface Mounted Devices, kurz SMD) ermöglichen es, die Bestückungsdichte auf einer Leiterplatte zu erhöhen und diese quasi beliebig, z.B. mit einer Anbindung eines Induktivlademoduls mit zusätzlichen Strom- und Signalleitungen, zu erweitern.

Ferner werden Einzelspannungsüberwachungen in der Regel über einen Eingangsfilter, der einen elektrischen Widerstand beinhaltet, an die Akkupackelektronik angeschlossen. Akkuzellen können aufgrund ihrer hohen Kapazität und ihres geringen Innenwiderstandes einen großen Strom zur Verfügung stellen. Damit in einem Fehlerfall, zum Beispiels durch Verschmutzung mit Metallstaub, keine Fehlfunktion auftritt, ist es vorteilhaft, dass die Eingangsfilterwiderstände die gleichzeitig diesen Strom dämpfen, so nahe an die Zellabgriffe zu bringen wie möglich. Eine flexible Leiterplatte ermöglicht die Bestückung mit diversen oberflächenmontierten Bauelementen, wie den genannten Widerständen, Tastern als Betätigungselemente und/oder Leuchtanzeigen, beispielsweise in Form von LEDs.

Grundsätzlich können innerhalb des Akkupacks verschiedene Ausführungsformen eines Zellhalters verwendet werden, so dass Akkuzellen mit verschiedenen Durchmessern und Längen aufgenommen werden können und eine Anwendung des Zellhalters in unterschiedlichen Akkupacks gewährleistet werden kann.

Als Akkuzellen für ein Akkupack können verschiedene Akkumulatorentypen mit unterschiedlichen Materialien, wie beispielsweise Lithium-Ionen (Li-Ion), Nickel-Cadmium (NiCd), Nickel-Metallhydrid (NiMH) oder Lithium-Polymer (LiPo), unterschiedlichen Bauformen, zum Beispiel runde, prismatische oder eckige, oder andere alternative Systeme, wie beispielsweise Brennstoffzellen, verwendet werden. Vorzugsweise werden insbesondere Lithiumionenzellen angewandt, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, wenn der Zellhalter Akkuzellen mit verschiedenen Durchmessern und Längen aufnehmen kann, wodurch die Anwendung des Zellhalters bzw. des Zellenträgers in unterschiedlichen Akkupacks erreicht werden kann.

Mit Hilfe der beschriebenen optimierten Ausgestaltung des erfindungsgemäßen Akkupacks mit einer flexiblen Leiterplatte wird insbesondere die Montage des Ackupacks bzw. des Zellhalters sowie die Positionierung und Montage verschiedener Komponenten, insbesondere die des Zellhalters, der Leiterplatten, der Kabelführungen, der Zellverbinder und/oder der Elektroniksicherungen innerhalb des Akkupackgehäuses erheblich verbessert.

Das erfindungsgemäße Akkupack kann auch in einem Werkzeugsystem vorgesehen sein. Dementsprechend bildet auch eine Handwerkzeugmaschine, die ein lösbar mit der Handwerkzeugmaschine verbindbares Akkupack umfasst, einen weiteren Gegenstand der Erfindung, wobei die Handwerkzeugmaschine zumindest ein korrespondierendes Gegenkontaktelement zur elektrischen und/oder mechanischen Verbindung mit der Schnittstelle des Akkupacks aufweist und das Akkupack im eingebauten Zustand elektrisch mit der Handwerkzeugmaschine verbunden ist.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, Handstaubsauger, Rührquirls und/oder Bohrschrauber verstanden werden. Unter Übertragung elektrischer Energie soll in diesem Zusammenhang insbesondere verstanden werden, dass die Handwerkzeugmaschine über einen Akku und/oder über eine Stromkabelanbindung mit Energie versorgt wird.

Unter einem Elektromotor sollen ganz allgemein alle Arten von elektrischen Verbrauchern, wie zum Beispiel ein EC-Motor, ein Linearantrieb, eine Lampe, eine Pumpe, ein Lüfter, ein Kompressor oder dergleichen verstanden werden. Der Vorteil der bürstenlose EC-Motoren liegt unter anderem darin, dass sie zum einen nahezu wartungsfrei sind und durch ihren hohen Wirkungsgrad während eines Akkubetriebes eine längere Arbeitszeit pro Akkuladung ermöglichen, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Explosionsdarstellung einer ersten Ausführungsform eines erfindungsgemäßen Akkupacks;
- Fig. 3: eine perspektivische Darstellung einer ersten Ausführungsform einer flexiblen Leiterplatte;
- Fig. 4: eine perspektivische Darstellung einer ersten Ausführungsform eines Zellhalters für ein erfindungsgemäßes Akkupack;
- Fig. 5: eine perspektivische Darstellung des Zellhalters aus Figur 4 mit der eingebauten flexiblen Leiterplatte aus Figur 2 ; und
- Fig. 6: eine Darstellung einer Einführung einer Kontaktzunge in den Zellhalters;
- Fig. 7: eine Detaildarstellung einer ersten Ausführungsform einer Kontaktfläche der Kontaktzunge; und
- Fig.8: eine Detaildarstellung einer ersten Ausführungsform einer Abdeckungsfläche der Kontaktzunge.

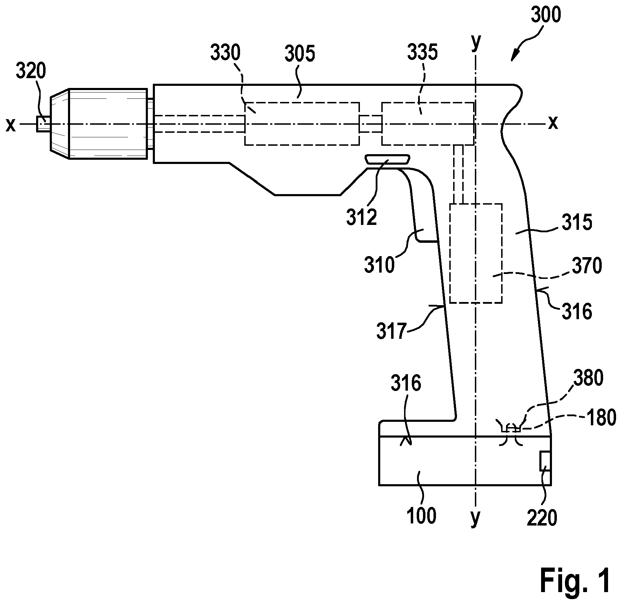

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, unabhängig davon, ob sie, wie dargestellt, mit einem Akkupack 100 als netzunabhängige Stromversorgung oder mit einer netzabhängigen Stromversorgung betrieben werden. Die Handwerkzeugmaschine 300 weist ein in einem Gehäuse 305 angeordnetes Getriebe 330 zur Übertragung eines von einem Antriebsmotor 335 erzeugten Drehmomentes auf eine um eine Achse x rotierende Antriebswelle, an welcher eine Werkzeugaufnahme 320 für ein nicht dargestelltes Werkzeug befestigt ist, und einen Handgriff 315 auf. Innerhalb des Gehäuses 305 ist eine Elektronik 370 angeordnet, welche in elektronischem und mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf.

Im Bereich des Handgriffes 315 ist ein erstes Bedienelement 310 für die Energieversorgung des Antriebsmotors 335 angeordnet, wobei das erste Bedienelement 310 aus dem Gehäuse 305 für den Benutzer manuell zugänglich herausragt, so dass in einer an sich bekannten Art und Weise durch eine Druckbewegung des ersten Bedienelementes 310 eine Steuerung und/oder Regelung des Antriebsmotors bevorzugterweise in Abhängigkeit vom Verstellweg des ersten Bedienelementes 310 ermöglicht werden kann, und auch die Spannungsversorgung für den Antriebsmotor 335 ein- und/oder ausgeschaltet werden kann. Ferner weist die Handwerkzeugmaschine 300 ein zweites Bedienelement 312 in Form eines Schiebeschalters zum Einstellen der Drehrichtung des Antriebsmotors 335 der Handwerkzeugmaschine 300 auf. Das zweite Bedienelement 312 ist senkrecht zur Drehachse x der Antriebswelle, insbesondere der Werkzeugaufnahme 320 der Handwerkzeugmaschine 300, verschieblich angeordnet, so dass das zweite Bedienelement 312 bei Betätigung zwischen einer ersten Position, einer zweiten Position und einer dritten Position hin und her bewegt werden kann. Dabei legen jeweils die erste und zweite Position eine Drehrichtung des Antriebsmotors fest. Somit kann der Benutzer der Handwerkzeugmaschine 300 bereits anhand der Positionen des zweiten Bedienelements 312 erkennen, in welchem Arbeitsmodus die Handwerkzeugmaschine 300 arbeitet. Zusätzlich weist das zweite Schaltelement zwischen der ersten Position und der zweiten Position eine dritte Position, beispielsweise eine Mittelstellung, auf, wobei in der dritten Position eine elektrische, elektromechanische und/oder mechanische Unterbrechung des Motorstroms erfolgt. So kann zum Beispiel die Bedienung des ersten Schaltelementes 310 mechanisch gesperrt sein, wobei das zweite Bedienelement 312 bei Bewegung in eine dritte Position verriegelnd auf das erste Schaltelement 310 wirkt. Dabei kann das zweite Bedienelement 312 wie dargestellt als Schiebeschalter oder alternativ als Kippschalter ausgeführt sein.

Das erste Bedienelement 310 und das zweite Bedienelement 312 sind entlang der Drehachse x derart angeordnet, dass es möglich ist, sowohl das erste als auch das zweite Bedienelement 310, 312 mit dem Zeigefinger oder Mittelfinger zu betätigen. Dabei ist der Abstand zwischen dem ersten Bedienelement 310 und dem zweiten Bedienelement 312 so gewählt, dass eine Einhandbedienung der Handwerkzeugmaschine 300 möglich ist. Beide Bedienelemente 310, 312 sind ferner in einem Bereich unterhalb der Drehachse x angeordnet und ragen aus dem Gehäuse 305 heraus.

In der in der Figur 1 gezeigten Position ist das Akkupack 100 an dem Handgriff 315 der Handwerkzeugmaschine 300 befestigt und durch Verriegelungsmittel verriegelt. Durch die Anordnung des Akkupacks 100 unterhalb des Handgriffs 315 wird die Bedienung der Handwerkzeugmaschine 300 nicht gestört. Die nicht im Detail dargestellten Verriegelungsmittel umfassen unter anderem ein Verriegelungselement und ein Betätigungselement 220. Durch Betätigung des Betätigungsmittels 220 kann das Akkupack 100 von dem Handgriff 315 der Handwerkzeugmaschine 300 gelöst werden. Ferner weist die Handwerkzeugmaschine 300 eine Schnittstelle 380 auf.

Das in Figur 1 dargestellte Akkupack 100 ist als Schiebeakkupack ausgeführt, und weist eine zur Schnittstelle 380 der Handwerkzeugmaschine 300 korrespondierende Schnittstelle 180 auf. Alternativ zum Schiebeakkupack ist auch eine Ausführung als Dreh- oder Schwenkakkupack möglich, wobei das Akkupack 100 an der der Schwenkachse gegenüberliegenden Seite durch Verrasten, Verschrauben, Verklemmen oder Verspannen an dem Gehäuse 305 der Handwerkzeugmaschine 300 lösbar arretiert werden kann. Auf diese Weise kann wirksam einem möglichen Abfallen des Akkupacks vom Gehäuse 305 entgegengewirkt werden.

Zum lösbaren Anbringen des Akkupacks 100 an einer Handwerkzeugmaschine 300 oder an einem Ladegerät weist das Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei das Akkupack 100 entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann das Akkupack 100 der Handwerkzeugmaschine 300 und/oder dem Ladegerät zugeordnet werden.

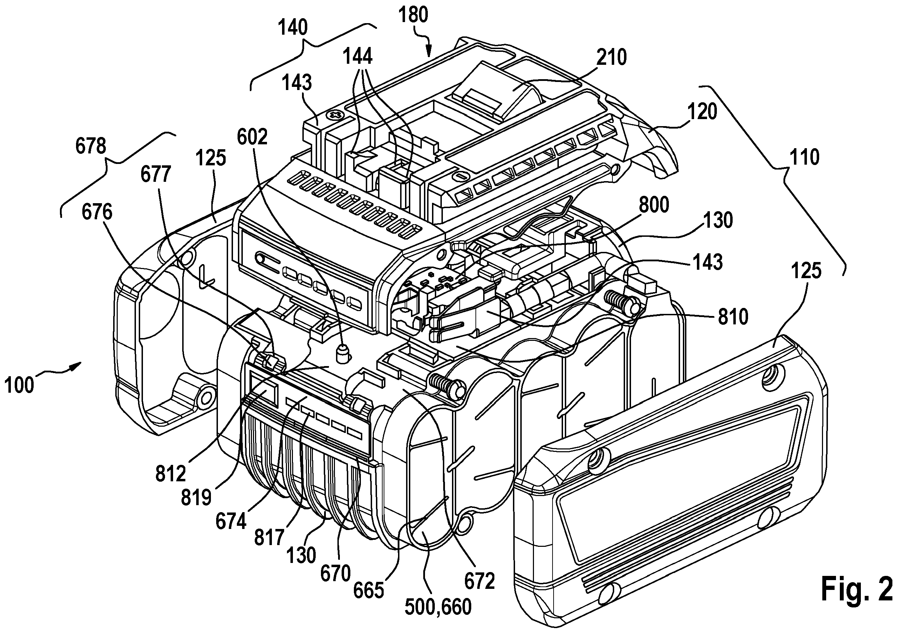

Zum Verriegeln des Akkupacks 100 am Handgriff 315 der Handwerkzeugmaschine 300 wird das Akkupack 100 entlang des Handgriffs 315 geschoben, und zwar entlang einer unteren, im Wesentlichen senkrecht zur Längsrichtung y des Handgriffs 315 ausgerichteten Außenfläche des Handgriffs 315. In der in der Figur 1 gezeigten Position ist das Akkupack 100 durch Verriegelungsmittel am Handgriff 315 verriegelt. Die Verriegelungsmittel umfassen unter anderem ein in Figur 2 dargestelltes Verriegelungselement 210 und ein Betätigungselement 220. Durch Betätigung des Betätigungsmittels 220 kann das Akkupack 100 von dem Handgriff 315 der Handwerkzeugmaschine 300 gelöst werden. Nach Entriegelung des Akkupacks 100 kann dieses vom Handgriff 315 getrennt werden. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Figur 2 zeigt ein Akkupack 100 in der Explosionsdarstellung. Das Akkupack 100 weist ein Gehäuse 110 aus einer ersten Gehäusekomponente 120 und einer zweiten Gehäusekomponente 130 auf. Hier ist deutlich zu erkennen, dass das Akkupackgehäuse 110 ferner einen Zellhalter 600 mit einer Mehrzahl in einer Reihenschaltung verschalteter, nicht im Detail dargestellter Akkuzellen 400 aufweist, wobei die zweite Gehäusekomponente 130 den Zellhalter 600 unmittelbar ausbildet. Der Zellhalter 600 ist zwischen den beiden Gehäusekomponenten 120, 130 positioniert. Das Akkupackgehäuse 110 weist ferner zwei Seitenkomponenten 125 auf, die im zusammengebauten Zustand die erste Gehäusekomponente 120 und die zweite Gehäusekomponente 130 bzw. den Zellhalter 600 derart zusammenhalten, dass ein Ablösen der ersten Gehäusekomponente 120 von der zweiten Gehäusekomponente 130, oder umgekehrt, verhindert wird. Das Akkupack 100 ist in der in Figur 2 dargestellten Ausführungsvariante als Schiebeakkupack ausgebildet.

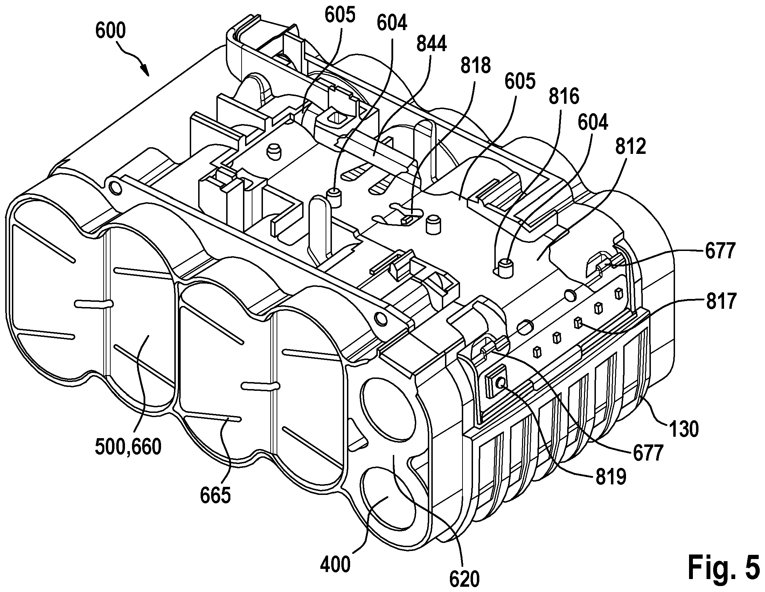

Die Verbindung der Akkuzellen 400 untereinander wird über Zellverbinder 500 realisiert, die insbesondere in den Figuren 2 und 5 dargestellt sind, durch die Zellverbinder 500 kann eine elektrische Verschaltung der Akkuzellen 400 untereinander in Parallel- und/oder Reihenschaltung vorgenommen werden. Vorteilhafterweise sind die Zellverbinder 500 bereits an der flexiblen Leiterplatte 812 angeordnet, so dass auf eine Kontaktierung der einzelnen Akkuzellen 400 mit der Ackupackelektronik 800 über zusätzliche Stromleiter verzichtet werden kann. Dabei werden die einzelnen Akkuzellen 400 zur mechanischen Fixierung in dem Zellhalter 600 beabstandet voneinander aufgenommen. Jede Akkuzelle 400 weist eine zu einer Längsachse x parallel verlaufende Mantelfläche auf, wobei die Mantelfläche von zwei senkrecht zu der Längsachse x stehenden Stirnflächen begrenzt wird, an denen sich die elektrischen Pole der Akkuzellen 400 befinden.

Grundsätzlich von Vorteil ist es, wenn der Zellhalter 600, wie in den Figuren 2, 4 und 5 dargestellt, bereichsweise eine Außenseite des Akkupackgehäuses 110, insbesondere die zweite Gehäusekomponente 130 ausbildet. Ferner ist es von Vorteil, wenn die Seitenkomponenten 125 aus dem gleichen Material bestehen, wie das restliche Akkupackgehäuse 110, vorzugsweise aus einem synthetischen, technisch verwendbaren thermoplastischen Kunststoff wie beispielsweise einem Polyamid. Auf diese Weise können Kosten reduziert und der Montageaufwand gering gehalten werden. Alternativ können die Seitenkomponenten 125 zumindest teilweise aus einem Metall, vorzugsweise aus Aluminium- oder Magnesiumdruckguss bestehen, wobei in diesem Fall eine ausreichende bzw. zuverlässige Isolationseinlage, beispielsweise ein elastisch wärmeleitendes Element zwischen den Zellverbindern 500 und den Seitenkomponenten 125 verwendet werden muss. Das elastische wärmeleitende Element ist vorteilhafterweise zwischen der Stirnflächen der Akkuzellen 400 und einer im Wesentlichen parallel zu der Stirnflächen der Akkuzellen 400 verlaufenden Wandung des Akkupackgehäuses 110 angeordnet, so dass ein thermischer Kontakt mit den Stirnflächen der Akkuzellen 400 entsteht und Wärme von den Akkuzellen 400 in Richtung der Wandung des Akkupackgehäuses 110 abführt wird. Das elastische wärmeleitende Element besteht vorteilhafterweise zumindest teilweise aus einem wärmeleitenden Material, das zumindest einer der Materialgruppen der Elastomere, der thermoplastischen Elastomere oder der Kohlefasern angehört. Auf diese Weise kann gewährleistet werden, dass das elastische wärmeleitende Element zum einen eine Wärmeleitfähigkeit aufweist, die größer als 0,15 W/mK, bevorzugterweise größer als 0,20 W/mK, besonders bevorzugterweise zwischen 0,20 W/mK und 0,50 W/mK ist, und zum anderen eine Shore-Härte aufweist, die kleiner als 50 Shore A ist und bevorzugterweise zwischen 20 Shore A und 45 Shore A liegt.

In den in den Figuren 2 und 5 dargestellten Ausführungsformen ist ferner zu erkennen, dass im Bereich der Stirnflächen der Akkuzellen 400 zwischen dem elastischen wärmeleitenden Element und der Wandung des Akkupackgehäuses 110 die Zellverbinder 500 derart großflächig ausgestaltet sind, dass sie, neben ihrer Funktion eine elektrische Verschaltung der Akkuzellen 400 untereinander in Parallel- und/oder Reihenschaltung zu gewährleisten, auch die Funktion eines Wärmespreizelementes 660 übernehmen und den erwünschten Wärmeübergang unterstützen können. Obwohl in den Figuren nicht im Detail dargestellt, ist es vorteilhaft, wenn das Wärmespreizelement 660 und der Zellverbinder 500 als Verbundbauteil, insbesondere als einstückiges Verbundbauteil ausgebildet ist und in den Bereichen, in denen der Wärmeübergang unerwünscht ist und möglichst weitgehend unterbunden werden soll, schlitzförmige Aussparungen 665 aufweisen, wobei für jede Akkuzelle 400 eine Aussparung 665 vorgesehen ist. Diese sind über die gesamte Fläche des Wärmespreizelementes 660 verteilt angeordnet, wobei in der dargestellten Ausführungsform für jede Akkuzelle 400 eine Aussparung 665 vorgesehen ist. Auf diese Weise kann gewährleistet werden, dass die von den Akkuzellen 400 punktuell auf die Zellverbinder 500 bzw. das Wärmespreizelement 660 übertragene Verlustwärme unmittelbar an das mit den Zellverbindern 500 in thermischem Kontakt stehende elastische Element übertragen werden kann. Das Wärmespreizelement 660 verteilt die punktuell übertragene Verlustwärme aufgrund der Aussparungen 665 auf die gesamte Fläche der jeweiligen Seitenkomponenten 125 des Akkupackgehäuses 110, wobei das Wärmespreizelement 660 auch mit der jeweiligen Seitenkomponente 125 in unmittelbarem thermischen Kontakt steht.

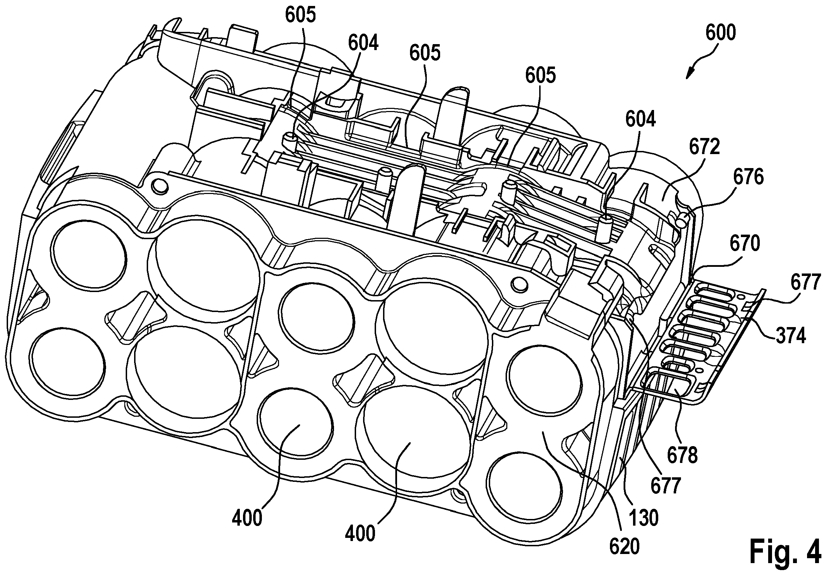

Der Zellhalter 600 übernimmt sowohl die Fixierung der Akkuzellen 400 in dem Akkupackgehäuse 120, 130 als auch die Kühlung der Akkuzellen 400 und besteht aus einem wärmeleitfähigen Material, beispielsweise Aluminium oder einem Kunststoff. Wie insbesondere in Figur 4 erkennbar, weist der Zellhalter 600 des Weiteren hülsenartige Isolierwandungen auf, so dass die einzelnen Akkuzellen 400 separiert werden und eine elektrische Isolierung der einzelnen Akkuzellen 400 voneinander gewährleistet werden kann. Der Wärmeübergangswiderstand zwischen den benachbarten Akkuzellen 400 und zwischen den Akkuzellen 400 und dem Zellhalter 600 ist dabei möglichst gering, so dass die von den Akkuzellen 400 erzeugte Verlustwärme gut nach außen abgeführt und eine Überhitzung des Akkupacks im Inneren verhindert werden kann.

In der dargestellten Ausführungsform weist der Zellhaltern 600 wenigstens ein klappbares Scharnier 670 auf. Das Scharnier 670 verbindet ein erstes Element 672 mit einem zweiten Element 674, wobei das erste Element 672 und das zweite Element 674 einstückig und gegeneinander verschwenkbar als Filmscharnier 670 ausgebildet sind. Filmscharniere 670 können während der Montage des Akkupacks 100 als Montagehilfe, insbesondere als Positionier- und Haltehilfen verwendet werden, so dass beispielsweise Leiterplatten 810, 812, Kabelführungen, Zellverbinder, Sicherungen und/oder sonstige Elektronikkomponenten lösbar und/oder dauerhaft in ihrer Lage am Akkupack 100 bzw. innerhalb des Akkupackgehäuses 110 positioniert werden können.

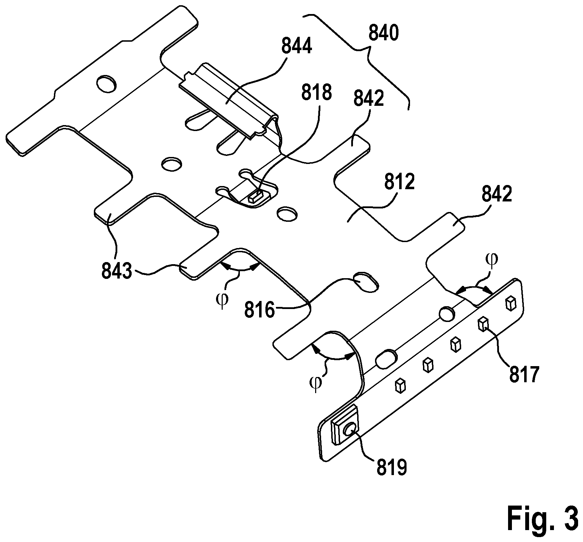

In der in Figur 2 dargestellten Ausführungsform ist ferner zu erkennen, dass innerhalb des Akkupackgehäuses 110 an der Oberfläche des Zellhalters 600 eine Leiterplatte 810 mit einer Akkupackelektronik 800 befestigt ist. Auf der Leiterplatte 810 sind Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät angeordnet. Dabei sind die Kontaktelemente 143 als Spannungskontaktelemente ausgebildet und dienen als Lade- und/oder Entladekontaktelemente, wohingegen die Kontaktelemente 144 als Signalkontaktelemente ausgebildet sind und der Signalübertragung vom Akkupack 100 zu der Handwerkzeugmaschine 300 oder dem Ladegerät und/oder von der Handwerkzeugmaschine 300 oder dem Ladegerät zum Ackupack 100 dienen. In nicht dargestellter Weise sind die Kontaktmittel 140 mit weiteren an der Leiterplatte 810 angebrachten elektronischen Einheiten, beispielsweise einem nicht dargestellten Mikrocontroller verbunden, um auf diese Weise eine Überwachung und/oder Steuerung der Akkuzellen 400, beispielsweise eine Einzelspannungsüberwachungen der Akkuzellen 400, zu ermöglichen. Die Akkupackelektronik 800 weist ferner eine insbesondere in der Figur 3 dargestellte flexible Leiterplatte 812 mit mehreren Kontaktmitteln 840 auf, die vorteilhafterweise derart am Zellhalter 600 befestigt wird, dass sie, wie in der in Figur 2 dargestellten Ausführungsform, zwischen dem erste Element 672 und dem zweiten Element 674 des Scharniers 670 eingeklemmt wird. Auch die flexible Leiterplatte 812 ist mit dem nicht dargestellten Mikrocontroller verbunden.

Leiterplatten 810, 812 bestehen im Allgemeinen aus einem Basismaterial, welches eine Vielzahl einzelner Leiterbahnen bzw. Kontaktflächen 802 aufweist. Die Kontaktflächen 802 sind meist durch eine Schutzschicht 804, beispielsweise Lötstopplack, der sich mit Ausnahme der Anschlusskontakte bzw. Kontaktmittel 840 über die gesamte Leiterplattenfläche zieht, geschützt. Leiterplatten 810, 812 sind als Träger für elektronische Bauteile geeignet und werden im allgemeinen vor ihrer Bestückung, direkt nach der Herstellung der Kontaktflächen bzw. Leiterbahnen 802, auf den freien Kontaktflächen 802 und in den verkupferten Bohrungen mit der Schutzschicht 804 versehen, die garantieren soll, dass sämtliche Kontaktmittel bzw. Anschlusskontakte 840, die beim Bestücken gebildet werden sollen, sowohl elektrisch als auch mechanisch allen Anforderungen genügen.

Die flexible Leiterplatte 812 weist eine Biegesteifigkeit auf, die zumindest bereichsweise derart ausgestaltet ist, dass eine Biegeverformung der flexiblen Leiterplatte 812 im montierten Zustand zumindest bereichsweise möglich ist. Die Biegeverformung der flexiblen Leiterplatte 812 kann derart stattfinden, dass eine Mittelebene der Leiterplatte 812 jeweils in einem Bereich der Biegeumformung 843 um einen Winkel ϕ gegenüber einer ursprünglichen Lage verformt wird. Auf diese Weise kann die flexible Leiterplatte 812, wie in Figur 5 zu erkennen ist, an die geometrische Form des Akkupackgehäuses 110 bzw. des Zellhalters 600 variabel angepasst werden. Um eine Lagesicherung der flexiblen Leiterplatte 812 auf dem Zellhalter 600 zu gewährleisten, weist der Zellhalter 600 mehrere Positionierungselemente 604 auf. Die Positionierungselemente 604 greifen im montierten Zustand in korrespondierende Ausnehmungen 816 der flexiblen Leiterplatte 812 ein.

Wie insbesondere in der Figur 3 dargestellt, weist die flexible Leiterplatte 812 mehrere mit Akkuzellen 400 korrespondierende Kontaktmittel 840 auf. Jedes Kontaktmittel 840 ist dazu vorgesehen, eine korrespondierende Akkuzelle 400 elektrisch zu kontaktieren, wobei die Kontaktmittel 840 vorteilhafterweise in Form einer biegbaren Kontaktzunge 842, vorzugsweise in Form von zwei gegenüberliegend angeordneten, biegbaren Kontaktzungen 842 ausgebildet sind, die wie in Figur 4 dargestellt, in korrespondierende Öffnungen 602 im Zellhalter 600 eingefügt werden.

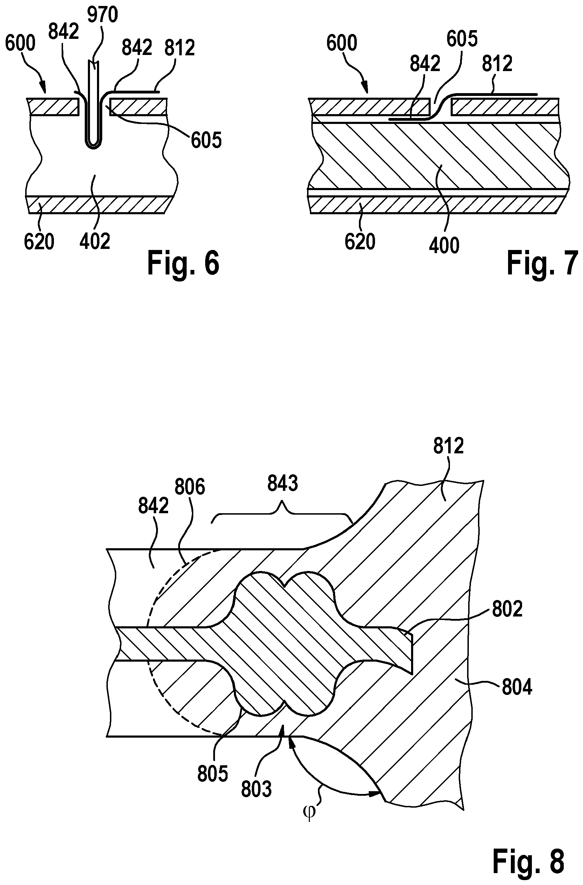

Die Figuren 6 und 7 stellen schematisch die Einführung einer Kontaktzunge 842 in eine Öffnung eines Zellhalters 600 dar. Die Kontaktzungen 842 werden mit Hilfe eines Werkzeuges 970 in Öffnungen 602 des Zellhalters 600 in einen Zellkanal 402 eingeführt, wobei die Kontaktzungen 842 beim Einführen der Akkuzellen 400 um den Winkel ϕ gegenüber einer ursprünglichen Lage verformt werden. Nach der Einführung der Akkuzellen 840 in den Zellkanal 402 wird das Kontaktmittel 840 zwischen der Wandung des Zellkanals 402 und den Akkuzelle 400 eingeklemmt, wobei alternativ die Kontaktmittel 840 bzw. die Kontaktzungen 842 zur elektrischen Kontaktierung an die Akkuzellen 400 geschweißt oder gelötet werden können. Wie in Figur 7 dargestellt hat der Winkel ϕ nach erfolgter Einführung einen Wert von circa 180°, wobei auch ein Wert zwischen 10° und 200°, bevorzugterweise einen Wert zwischen 30° und 190° möglich ist. Die einzelnen Ackuzellen 400 werden über die Kontaktmittel 840 bzw. die Kontaktzungen 842 direkt mit der flexiblen Leiterplatte 812 verbunden. Bei der dargestellten vorteilhaften Ausführungsform einer flexiblen Leiterplatte 812 mit jeweils zwei gegenüberliegend angeordneten Kontaktmitteln 840 entsteht bei der Einführung der Ackuzellen 400 in den Zellkanal 402 ein gleichmäßiger Zug in beide Richtungen auf die flexible Leiterplatte 600.

Die Figur 8 stellt eine schematische Detailansicht einer Kontaktzunge 842 einer flexiblen Leiterplatte 812 dar. Die Kontaktflächen 802 weisen in Bereichen der Biegeumformung 843 eine Kontaktfläche 802 auf, die zumindest bereichsweise insbesondere an der Stelle, an der die Kontaktzunge 842 abgebogen werden soll, durch eine Metallfläche ausgebildet wird, wobei die Kontaktfläche 802 zumindest in den Bereichen der Biegeumformung durch eine Schutzschicht 802 zumindest weitestgehend elektrisch isoliert ist. Auf diese Weise ist die Kontaktfläche 802 ausgebildet, eine mechanische Schwachstelle der flexiblen Leiterplatte 812 zu definieren. Dazu weist die Kontaktfläche 802 im Bereich der Biegeumformung 843 zuerst eine Querschnittsverbreiterung 805, dann eine Querschnittsverringerung 803 und anschließend eine Querschnittsverbreiterung 805 auf. Die breite Kontaktfläche 802 sorgt hat höhere elastische Verformungsreserven, während die Querschnittsverringerung 803 die mechanische Schwachstelle definiert. Auf diese Weise ist die Kontaktfläche 802 auf der Kontaktzunge 842 im Bereich der Biegeumformung 843 plastisch verformbar, während sie in den anderen Bereichen auf der Kontaktzunge 842 und der flexiblen Leiterplatte 812 weitgehend elastisch bleibt.

Ferner ist vorgesehen, dass der Übergang zwischen einem Bereich der Kontaktzungen 842, an dem die Kontaktfläche 802 keine Schutzschicht 804 aufweist, und dem Bereich der Kontaktzunge 842, der mit einer Schutzschicht 804 versehen ist, derart ausgeführt ist, dass das Ende 806 der Schutzschicht 804 und die Querschnittsverbreiterung 805 der Kontaktfläche 802 der Kontaktzunge 842 nicht am gleichen Ort stattfindet, sondern die Schutzschicht 804 die Kontaktfläche 802 der Kontaktzunge 842 teilweise überlappt. Nicht im Detail dargestellt ist es weiterhin von Vorteil, wenn die Kontur der Schutzschicht 804 nicht in einer geraden Linie senkrecht zur Längsrichtung der Kontaktzunge 842 erfolgt, sondern in einer Krümmung. Auf diese Weise entsteht kein scharfer Übergang der Biegefestigkeit und damit auch keine mechanische Schwachstelle. Aus den gleichen Gründen ist es vorteilhaft, wenn die unter der Schutzschicht liegende Kontaktfläche 802 nicht entlang einer senkrecht zur Längsrichtung der Kontaktzunge 842 verlaufenden Linie endet, sondern entlang einer gekrümmt verlaufenden Linie. Auf diese Weise erfolgt in Längsrichtung der Kontaktzunge 842 einerseits eine graduelle Zunahme der Kontaktfläche 802 andererseits aber auch eine graduelle Abnahme der Schutzschicht 804.

In einer nicht dargestellten Ausführungsform ist es auch möglich, dass der Zellhalter 600 im Bereich des Zellkanals 402 für jede Akkuzelle 400 eine mit den Kontaktmitteln 840 korrespondierende Aussparungen aufweist, durch die das jeweilige Kontaktmittel 840 in den Zellkanal 402 zur Kontaktierung der Akkuzelle 400 eingeführt werden kann, wodurch die Kontaktmittel 840 die Akkuzellen 400 kontaktieren. Die Qualität des elektrischen Kontaktes kann in einer bevorzugten Ausführungsform dadurch erhöht werden, dass die die Akkuzellen 400 im Wesentlichen keine Isolierummantelung bzw. nur bereichsweise eine Isolierummantelung aufweisen, wobei die Isolierummantelung zumindest in dem Bereich, in dem die Kontaktmittel 840 die Akkuzellen 400 kontaktieren, wenigstens eine Aussparung aufweist, wobei zur Reduzierung eines Übergangwiderstandes zwischen dem Kontaktmittel 840 und der Akkuzelle 400 die Akkuzelle 400 mit einer leitfähigen und passivierenden Paste versehen sein kann.

Ferner können mehrere verschiedene elektrische Bauteile auf der flexiblen Leiterplatte 812 positioniert werden, die örtlich voneinander getrennt angeordnet sind, wie beispielsweise verschiedene Betätigungselemente 819, Leuchtanzeigen 817, Spannungsabgriffe, Temperatursensoren, diverse Funktionsgruppen der Akkupackelektronik 800, Antennen für ein Funkmodul, Anschlüsse für ein Wireless-Lademodul und/oder andere oberflächenmontierten Bauelemente. Oberflächenmontierte Bauelemente (Surface Mounted Devices, kurz SMD) ermöglichen es, die Bestückungsdichte auf einer Leiterplatten 810, 812 zu erhöhen und diese quasi beliebig, z.B. mit einer Anbindung eines Induktivlademoduls mit zusätzlichen Strom- und Signalleitungen, zu erweitern. Somit kann durch die vorliegende Erfindung die Komplexität der Verkabelung und/oder die Anzahl von Lötverbindungen innerhalb des Akkupackgehäuses 110 reduziert werden, wodurch der Montageaufwand und damit die Kosten verringert und das Akkupack 100 robuster und langlebiger werden.

Ferner werden in der Regel Einzelspannungsüberwachungen über einen nicht dargestellten Eingangsfilter, der einen elektrischen Widerstand beinhaltet, an die Akkupackelektronik 800 angeschlossen. Eine flexible Leiterplatte ermöglicht die Bestückung mit diversen oberflächenmontierten Bauelementen, auch mit den genannten Eingangsfilterwiderständen oder einem Taster als Betätigungselement 819 und/oder Leuchtanzeigen, beispielsweise in Form von LEDs 817.

Das zweite Element 674 weist mehrere Sichtfelder 679 auf, so dass die auf der flexiblen Leiterplatte 812 angeordnete Leuchtanzeigen 817 durch diese nach erfolgter Montage der flexiblen Leiterplatte 812 zwischen dem ersten Element 672 und dem zweiten Element 674 sichtbar sind, wodurch beispielsweise unterschiedlichen Ladezustände der Akkuzellen 400 anzeigt werden können.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Akkupack (100) für eine Handwerkzeugmaschine (300), aufweisend
ein Akkupackgehäuse (110); wenigstens einen Zellhalter (600), wobei der Zellhalter (600) mindestens eine Akkuzelle (400) aufnimmt; und eine Akkupackelektronik (800); wobei
die Akkupackelektronik (800) zumindest eine flexible, insbesondere biegbare Leiterplatte (812) umfasst; wobei
die flexible Leiterplatte (812) wenigstens ein mit der Akkuzelle (400) korrespondierendes Kontaktmittel (840) aufweist, wobei das Kontaktmittel (840) die korrespondierende Akkuzelle (400) elektrisch zur Einzelspannungsüberwachung kontaktiert; und wobei das Kontaktmittel (840) für die Akkuzelle (400) in Form wenigstens einer biegbaren Kontaktzunge (842) der flexiblen Leiterplatte (812) ausgebildet ist;
**dadurch gekennzeichnet, dass**
die Kontaktzunge (842) der flexiblen Leiterplatte (812) derart ausgebildet ist, dass einerseits eine elastische Verformung der flexiblen Leiterplatte (812) möglich ist und andererseits die flexible Leiterplatte (812) in Bereichen der Biegeumformung (843) eine Kontaktfläche (802) aufweist, die ausgebildet ist, eine mechanische Schwachstelle der flexiblen Leiterplatte (812) zu definieren, insbesondere durch eine Querschnittsverringerung (803) der Kontaktfläche (802) im Bereich der Biegeumformung (843).

2. Akkupack (100) nach Anspruch 1, **dadurch gekennzeichnet, dass** die flexible Leiterplatte (812) eine Biegesteifigkeit aufweist, die zumindest bereichsweise derart ausgestaltet ist, dass wenigstens eine Biegeverformung, vorzugsweise mehrere Biegeverformungen der flexiblen Leiterplatte (812) im montierten Zustand möglich ist.

3. Akkupack (100) nach Anspruch 1 oder 2, **dadurch gekennzeichnet, dass** die wenigstens eine Biegeverformung der flexiblen Leiterplatte (812) derart stattfinden kann, dass eine Mittelebene der Leiterplatte (812) im Bereich der Biegeumformung um einen Winkel (ϕ) gegenüber einer ursprünglichen Lage verformt werden kann.

4. Akkupack (100) nach Anspruch 3, **dadurch gekennzeichnet, dass** der Winkel (ϕ) einen Wert zwischen 10° und 200°, bevorzugterweise zwischen 30° und 190°, besonders bevorzugterweise 180° hat.

5. Akkupack (100) nach einem der Ansprüche 1 bis 4, **dadurch gekennzeichnet, dass** das Kontaktmittel (840) für die Akkuzelle (400) in Form von zwei gegenüberliegend angeordneten, biegbaren Kontaktzungen (842) der flexiblen Leiterplatte (812) ausgebildet ist.

6. Akkupack (100) nach einem der Ansprüche 1 bis 5, **dadurch gekennzeichnet, dass** der Zellhalter (600) wenigstens eine Öffnung (602) zur Durchführung der Kontaktzunge (842) in den Zellhalter (600) aufweist.

7. Akkupack (100) nach einem der Ansprüche 1 bis 6, **dadurch gekennzeichnet, dass** die Kontaktzunge (842) mit Hilfe eines Werkzeuges (970) in die Öffnung (602) einführbar ist.

8. Akkupack (100) nach einem der Ansprüche 1 bis 7, **dadurch gekennzeichnet, dass** die Kontaktfläche (802) zumindest bereichsweise durch eine Metallfläche ausgebildet wird, wobei die Kontaktfläche (802) zumindest in den Bereichen der Biegeumformung (843) durch eine Schutzschicht (804) zumindest weitestgehend elektrisch isoliert ist.

9. Akkupack (100) nach einem der Ansprüche 1 bis 8, **dadurch gekennzeichnet, dass** die Kontaktzunge (842) zur elektrischen Kontaktierung an die Akkuzelle (400) geklemmt, geschweißt oder gelötet ist.

10. Akkupack (100) nach einem der Ansprüche 1 bis 9, **dadurch gekennzeichnet, dass** die flexible Leiterplatte (812) mehrere elektrische Bauteile aufweist, insbesondere wenigstens ein Betätigungselement, wenigstens eine Leuchtanzeige und/oder wenigstens einen Temperatursensor.

11. Akkupack (100) nach einem der Ansprüche 1 bis 10, **dadurch gekennzeichnet, dass** die flexible Leiterplatte (812) eine Leiterplatte mit wenigsten einer einseitigen Leiterstruktur ist.

12. Akkupack (100) nach einem der Ansprüche 1 bis 11, **dadurch gekennzeichnet, dass** die flexible Leiterplatte (812) wenigstens eine Ausnehmung (816), vorzugsweise mehrere Ausnehmungen (816) aufweist, wobei der Zellhalter (600) wenigstens ein korrespondierendes Positionierungselement (604), vorzugsweise mehrere korrespondierende Positionierungselemente (604), aufweist, wobei das Positionierungselement (604) in einem montierten Zustand derart in die Ausnehmung (816) der flexiblen Leiterplatte (812) greift, dass die Position der flexible Leiterplatte (812) an dem Zellhalter (600) gesichert wird.

13. Akkupack (100) nach einem der Ansprüche 1 bis 12, **dadurch gekennzeichnet, dass** die flexible Leiterplatte (812) mit Widerständen, insbesondere mit Filterwiderständen, LEDs , Tastern und/oder anderen oberflächenmontierten Bauelementen (SMDs) bestückt ist.

## Claims

1. Battery pack (100) for a hand-held machine-tool (300), having
a battery pack housing (110); at least one cell holder (600), wherein the cell holder (600) receives at least one battery cell (400); and battery pack electronics (800); wherein
the battery pack electronics (800) comprise at least one flexible, in particular bendable circuit board (812); wherein
the flexible circuit board (812) has at least one contact means (840) corresponding to the battery cell (400), wherein the contact means (840) makes electrical contact with the corresponding battery cell (400) in order to monitor an individual voltage; and wherein the contact means (840) for the battery cell (400) is designed in the form of at least one bendable contact tongue (842) of the flexible circuit board (812);
**characterized in that**
the contact tongue (842) of the flexible circuit board (812) is designed such that it is possible to elastically deform the flexible circuit board (812), on the one hand, and the flexible circuit board (812) has a contact surface (802) in regions of the bent deformation (843), on the other hand, which contact surface is designed to define a mechanical weak point of the flexible circuit board (812), in particular through a cross-sectional narrowing (803) of the contact surface (802) in the region of the bent deformation (843).

2. Battery,pack (100) according to Claim 1, **characterized in that** the flexible circuit board (812) has a flexural rigidity that is configured, at least in regions, such that at least one bending deformation, preferably a plurality of bending deformations of the flexible circuit board (812) is possible in the assembled state.

3. Battery pack (100) according to Claim 1 or 2, **characterized in that** the at least one bending deformation of the flexible circuit board (812) is able to take place in such a way that a central plane of the circuit board (812) is able to be deformed in the region of the bent deformation by an angle (ϕ) in relation to an original position.

4. Battery pack (100) according to Claim 3, **characterized in that** the angle (ϕ) has a value between 10° and 200°, preferably between 30° and 190°, particularly preferably 180°.

5. Battery pack (100) according to one of Claims 1 to 4, **characterized in that** the contact means (840) for the battery cell (400) is designed in the form of two bendable contact tongues (842), arranged opposite one another, of the flexible circuit board (812.

6. Battery pack (100) according to one of Claims 1 to 5, **characterized in that** the cell holder (600) has at least one opening (602) for passing the contact tongue (842) into the cell holder (600).

7. Battery pack (100) according to one of Claims 1 to 6, **characterized in that** the contact tongue (842) is able to be inserted into the opening (602) using a tool (970).

8. Battery pack (100) according to one of Claims 1 to 7, **characterized in that** the contact surface (802) is formed at least in regions by a metal surface, wherein the contact surface (802) is at least largely electrically isolated by a protective layer (804) at least in the regions of the bent deformation (843).

9. Battery pack (100) according to one of Claims 1 to 8, **characterized in that** the contact tongue (842) is clamped, welded or soldered to the battery cell (400) in order to make electrical contact.

10. Battery pack (100) according to one of Claims 1 to 9, **characterized in that** the flexible circuit board (812) has a plurality of electrical components, in particular at least one actuation element, at least one indicator light and/or at least one temperature sensor.

11. Battery pack (100) according to one of Claims 1 to 10, **characterized in that** the flexible circuit board (812) is a circuit board having at least a one-sided conductor structure.

12. Battery pack (100) according to one of Claims 1 to 11, **characterized in that** the flexible circuit board (812) has at least one recess (816), preferably a plurality of recesses (816), wherein the cell holder (600) has at least one corresponding positioning element (604), preferably a plurality of corresponding positioning elements (604), wherein the positioning element (604) engages in the recess (816) of the flexible circuit board (812) in an assembled state such that the position of the flexible circuit board (812) is secured on the cell holder (600).

13. Battery pack (100) according to one of Claims 1 to 12, **characterized in that** the flexible circuit board (812) is populated with resistors, in particular with filter resistors, LEDs, buttons and/or other surface-mount devices (SMDs).

## Revendications

1. Bloc accumulateur (100) pour une machine-outil électroportative (300), comprenant
un boîtier de bloc accumulateur (110) ; au moins un porte-cellule (600), le porte-cellule (600) accueillant au moins une cellule d'accumulateur (400) ; et une électronique de bloc accumulateur (800) ;
l'électronique de bloc accumulateur (800) comportant au moins un circuit imprimé (812) souple, notamment flexible ;
le circuit imprimé (812) souple possédant au moins un moyen de contact (840) correspondant à la cellule d'accumulateur (400), le moyen de contact (840) entrant électriquement en contact avec la cellule d'accumulateur (400) correspondante pour la surveillance de la tension individuelle ; et le moyen de contact (840) pour la cellule d'accumulateur (400) étant réalisé sous la forme d'au moins une languette de contact (842) flexible du circuit imprimé (812) souple ;
**caractérisé en ce que**
la languette de contact (842) du circuit imprimé (812) souple est configurée de telle sorte que d'une part une déformation élastique du circuit imprimé (812) souple est possible et, d'autre part, le circuit imprimé (812) souple possède dans les zones de la déformation par flexion (843) une surface de contact (802) qui est configurée pour définir un point faible mécanique du circuit imprimé (812) souple, notamment par une réduction de la section transversale (803) de la surface de contact (802) dans la zone de la déformation par flexion (843).

2. Bloc accumulateur (100) selon la revendication 1, **caractérisé en ce que** le circuit imprimé (812) souple présente une résistance à la flexion qui, au moins dans certaines zones, est configurée de telle sorte qu'au moins une déformation par flexion, de préférence plusieurs déformations par flexion du circuit imprimé (812) souple à l'état monté sont possibles.

3. Bloc accumulateur (100) selon la revendication 1 ou 2, **caractérisé en ce que** l'au moins une déformation par flexion du circuit imprimé (812) souple peut avoir lieu de telle sorte qu'un plan central du circuit imprimé (812) peut être déformé dans la zone de la déformation par flexion d'un angle (ϕ) par rapport à une position initiale.

4. Bloc accumulateur (100) selon la revendication 3, **caractérisé en ce que** l'angle (ϕ) possède une valeur entre 10° et 200°, préférablement entre 30° et 190°, notamment préférablement de 180°.

5. Bloc accumulateur (100) selon l'une des revendications 1 à 4, **caractérisé en ce que** le moyen de contact (840) pour la cellule d'accumulateur (400) est réalisé sous la forme de deux languettes de contact (842) flexibles du circuit imprimé (812) souple disposées l'une en face de l'autre.

6. Bloc accumulateur (100) selon l'une des revendications 1 à 5, **caractérisé en ce que** le porte-cellule (600) possède au moins une ouverture (602) servant au passage de la languette de contact (842) dans le porte-cellule (600).

7. Bloc accumulateur (100) selon l'une des revendications 1 à 6, **caractérisé en ce que** la languette de contact (842) peut être introduite dans l'ouverture (602) à l'aide d'un outil (970).

8. Bloc accumulateur (100) selon l'une des revendications 1 à 7, **caractérisé en ce que** la surface de contact (802) est au moins dans certaines zones formée par une surface métallique, la surface de contact (802) étant isolée électriquement au moins en grande partie par une couche de protection (804) au moins dans les zones de la déformation par flexion (843).

9. Bloc accumulateur (100) selon l'une des revendications 1 à 8, **caractérisé en ce que** la languette de contact (842) est serrée, soudée ou brasée à la cellule d'accumulateur (400) en vue d'établir le contact électrique.

10. Bloc accumulateur (100) selon l'une des revendications 1 à 9, **caractérisé en ce que** le circuit imprimé (812) souple possède plusieurs composants électriques, notamment au moins un élément d'actionnement, au moins un témoin lumineux et/ou au moins une sonde de température.

11. Bloc accumulateur (100) selon l'une des revendications 1 à 10, **caractérisé en ce que** le circuit imprimé (812)souple est un circuit imprimé comprenant au moins une structure conductrice simple face.

12. Bloc accumulateur (100) selon l'une des revendications 1 à 11, **caractérisé en ce que** le circuit imprimé (812) souple possède au moins une cavité (816), de préférence plusieurs cavités (816), le porte-cellule (600) possédant au moins un élément de positionnement (604) correspondant, de préférence plusieurs éléments de positionnement (604) correspondants, l'élément de positionnement (604) dans un état monté venant en prise dans la cavité (816) du circuit imprimé (812) souple de telle sorte que la position du circuit imprimé (812) souple au niveau du porte-cellule (600) est bloquée.

13. Bloc accumulateur (100) selon l'une des revendications 1 à 12, **caractérisé en ce que** le circuit imprimé (812) souple est garni de résistances, notamment de résistances de filtre, de LED, de touches et/ou d'autres composants à montage en surface (CMS).
